# EUROPÄISCHE PATENTSCHRIFT

(11) **EP 4 025 895 B1**
(45) Veröffentlichungstag und Bekanntmachung des Hinweises auf die Patenterteilung: **16.09.2026**
(21) Anmeldenummer: 20796712.6
(22) Anmeldetag: 14.10.2020
(51) Int. Cl.: G01N 21/25, G01N 21/31, B01L 99/00

(54) **KOMPAKTER MIKROPLATTEN-LESER UND ENTSPRECHENDES VERFAHREN ZUR VERWENDUNG**
COMPACT MICROPLATE READER AND CORRESPONDING METHOD OF USE
LECTEUR DE MICROPLAQUES COMPACT ET PROCÉDÉ ASSOCIÉ

(30) Priorität: 22.10.2019 DE 102019128546
(43) Veröffentlichungstag der Anmeldung: 13.07.2022
(73) Patentinhaber: Byonoy GmbH, 22761 Hamburg (DE)
(72) Erfinder: NAZIRIZADEH, Yousef, 22765 Hamburg (DE); BEHRENDS, Volker, 22307 Hamburg (DE); METZ, Sebastian, 20259 Hamburg (DE)
(74) Vertreter: Seemann & Partner Patentanwälte mbB
(86) Internationale Anmeldenummer: PCT/EP2020/078873
(87) Internationale Veröffentlichungsnummer: WO 2021/078599

(56) Entgegenhaltungen:
- US-A1- 2013 228 675
- US-A1- 2016 051 982
- US-A1- 2017 038 401

## Beschreibung

Die Erfindung betrifft eine Transmissionsvorrichtung zur Untersuchung von Proben in Kavitäten einer Mikrotiterplatte. Die Erfindung ist durch die beigefügten Ansprüche definiert und beinhaltet eine Beleuchtungseinrichtung und eine mit der Beleuchtungseinrichtung zusammensetzbare Detektionseinrichtung, zwischen denen im zusammengesetzten Zustand der Transmissionsvorrichtung ein Zwischenraum ausgebildet ist, der dazu eingerichtet ist, eine Mikrotiterplatte aufzunehmen, wobei die Beleuchtungseinrichtung wenigstens eine Emissionsquelle aufweist, die ausgebildet ist, von der Emissionsquelle erzeugtes Emissionslicht auf mehrere Teilstrahlengänge aufzuteilen, die im zusammengesetzten Zustand der Transmissionsvorrichtung durch den Zwischenraum verlaufen, wobei die Detektionseinrichtung Detektoreinheiten aufweist, die ausgebildet und angeordnet sind, entlang der Transmissionsstrahlengänge einfallende Lichtsignale separat zu messen. Weiterhin betrifft die Erfindung ein Verfahren zum Untersuchen von Proben in Kavitäten einer Mikrotiterplatte mittels Transmission, wobei die Mikrotiterplatte in einem Zwischenraum zwischen einer Beleuchtungseinrichtung und einer Detektionseinrichtung angeordnet wird, wobei Emissionslicht während eines ersten Zeitraums in der Beleuchtungseinrichtung mittels einer Emissionsquelle erzeugt wird.

Zur einfachen Handhabung von Proben werden im medizinischen, biologischen und chemischen Bereich vielfach Mikrotiterplatten verwendet. Solche Mikrotiterplatten weisen eine Anzahl Näpfchen oder Kavitäten auf, die in einer Kavitätenebene in einem Muster angeordnet sind und in denen bzw. in die die Proben angeordnet bzw. eingebracht werden. Die übliche Anordnung der Kavitäten ist eine quadratische Anordnung mit gleich beabstandeten Reihen und Spalten von Kavitäten. Um die Handhabung von Mikrotiterplatten zu vereinfachen, sind die Abmessungen der Mikrotiterplatten gemäß eines ANSI-Standards genormt. Es existieren verschiedene Formate der Mikrotiterplatten, die über eine unterschiedliche Anzahl von Kavitäten verfügen, beispielsweise zwölf, achtundvierzig, sechsundneunzig, dreihundertvierundachtzig und tausendfünfhundertsechsunddreißig. Damit kann eine Vielzahl von Untersuchungen innerhalb kurzer Zeit ausgeführt werden.

Zur weiteren Automatisierung ist es außerdem wünschenswert, das Handling und die Untersuchungen durch ein Roboter- oder Liquid-Handling-System durchführen zu lassen.

Ein häufig eingesetztes Untersuchungsverfahren für Proben in Mikrotiterplatten sind Transmissionsuntersuchungen, bei denen Licht durch die Kavitäten und die darin enthaltenen Proben geleitet und das transmittierte Licht gemessen wird. Auf diese Weise lässt sich Aufschluss über Eigenschaften der Proben gewinnen. Beispielsweise kommt vielfach bei "Enzyme-Linked Immunosorbent Assay" (ELISA)-Untersuchungen ein Transmissionsverfahren zum Einsatz. Bei ELISA-Untersuchungen werden Antigene nachgewiesen, indem die Antigene über einen Erstantikörper absorptiv gebunden werden und ein Enzym-gekoppelter Zweitantikörper zu einer Reaktion eines Farbstoffsubstrats führt. Diese Reaktion des Farbstoffsubstrats lässt sich mit der ELISA-Untersuchung nachweisen.

Außer der Messung der Reaktion eines Farbstoffsubstrats kann beispielsweise auch eine Fluoreszenz gemessen werden, zu der es nach der Einstrahlung des Lichts kommt.

Vorrichtungen, mit denen Transmissionsuntersuchungen von Proben in Mikrotiterplatten durchgeführt werden, sind zumeist groß, teuer und aufwendig zu bedienen. Dies liegt darin begründet, dass in diesen Vorrichtungen häufig eine Mechanik zum Verfahren einer Emissionsquelle und des Detektors vorgesehen ist. Mit einer solchen Mechanik können alle Kavitäten der Mikrotiterplatte nacheinander angefahren und das transmittierte Licht aus den Kavitäten gemessen werden. Allerdings benötigt eine solche Mechanik zusätzlichen Bauraum und verursacht zusätzliche Kosten bei der Herstellung der Vorrichtung. Fehlfunktionen in der Mechanik führen zudem zu einem Ausfall der Vorrichtung.

Weiterhin sehen diese Vorrichtungen vielfach eine Abschirmung des Messraums vor, in dem die Mikrotiterplatte während der Messung angeordnet ist. Dadurch wird der Detektor vor dem Einfall von Streulicht geschützt. Nachteilig nimmt diese Abschirmung aber ebenfalls Bauraum in Anspruch, so dass diese Vorrichtungen entsprechend große Abmessungen aufweisen.

In der nicht vorveröffentlichten deutschen Patentanmeldung Nr. 10 2018 111 033.2 der Anmelderin wird hierzu eine in offener Bauweise ausgeführte Transmissionsvorrichtung zur Untersuchung von Proben in Kavitäten einer Mikrotiterplatte vorgestellt, die eine Beleuchtungseinrichtung und eine Detektionseinrichtung umfasst, zwischen denen ein Zwischenraum ausgebildet ist, der dazu eingerichtet ist, eine Mikrotiterplatte aufzunehmen, die von einer Seite der Transmissionsvorrichtung durch eine Einschuböffnung eingeschoben und ebenso wieder entnommen wird. Die Beleuchtungseinrichtung weist wenigstens eine Emissionsquelle auf, die zur Erzeugung von Emissionslicht ausgebildet ist und ist dazu eingerichtet, das von der Emissionsquelle erzeugte Emissionslicht auf mehrere Teilstrahlengänge aufzuteilen, wobei mehrere der Teilstrahlengänge als Transmissionsstrahlengänge durch den Zwischenraum zu jeweils einer Detektoreinheit der Detektionseinrichtung verlaufen und wobei die Detektionseinrichtung dazu ausgebildet ist, entlang der Transmissionsstrahlengänge einfallende Lichtsignale mittels der Detektoreinheiten für jeden Transmissionsstrahlengang separat zu messen.

Zur Lösung des Problems des durch die Einschuböffnung eintretenden Umgebungslichts auf die Messung wird in der ebenfalls nicht vorveröffentlichten deutschen Patentanmeldung Nr. 10 2018 111 033.2 der Anmelderin bei einer ähnlich ausgestalteten Transmissionsvorrichtung vorgeschlagen, dass die Detektionseinrichtung einen winkelabhängigen Filter umfasst, der zwischen der Beleuchtungseinrichtung und dem wenigstens einen Detektor im Strahlengang des Emissionslichts angeordnet ist und im Wesentlichen nur solche Lichtstrahlen durchlässt, deren Einfallswinkel kleiner als ein vorgebbarer Grenzwinkel sind. Dies schaltet Umgebungslicht effektiv aus.

US2017/038401A1 offenbart ein System und Verfahren zur Verarbeitung von Proben, bei der eine Vorrichtung die Probe empfängt, um eine Probenvorbereitung, einen Probentest und einen Nachweis durchzuführen. Die Vorrichtung kann ein oder mehrere Module umfassen, die diese Schritte ausführen können. Ein Ausführungsbeispiel zeigt eine u.a. in Transmission betriebene Nukleinsäure-Teststation, die einen Heizblock aufweist, der Mikrotiterplatten aufnehmen kann. Die Mikrotiterplatte lässt sich von oben in ein ausgezogenes Schubladenteil einsetzen und dann einziehen.

US2016/051982A1 zeigt eine Transmissionsvorrichtung zur Messung von Proben in Mikrotiterplatten. Die Vorrichtung umfasst ein unteres und eine oberes Gehäuse, welche einen geschlossenen Messaufbau bilden. In dem unteren Gehäuse ist eine Beleuchtungseinrichtung untergebracht, in dem oberen Gehäuse eine Detektionseinrichtung. Zur Messung in Transmission wird die Mikrotiterplatte in einen Zwischenraum zwischen Beleuchtungseinrichtung und Detektionseinrichtung eingeführt. Die Beleuchtungseinrichtung verteilt Licht auf mehrere Teilstrahlengänge, die von verschiedenen Detektoreinheiten der Detektionseinrichtung erfasst werden. Um die Mikrotiterplatte in den Zwischenraum einzusetzen, ist entweder ein Schlitz vorgesehen, durch den die Mikrotiterplatte seitlich eingeführt wird, oder aber das obere Gehäuse wird relativ zum unteren Gehäuse verschoben, um die Mikrotiterplatte von oben einzusetzen. In letzterem Fall, also beim Einsetzen von oben, wird die Mikrotiterplatte in eine nach oben offene und seitlich geschlossene Aufnahme eingesetzt.

Die Aufgabe der Erfindung besteht demgegenüber darin, eine Transmissionsvorrichtung zur Untersuchung von Proben in Kavitäten einer Mikrotiterplatte und Verfahren zum Untersuchen von Proben in Kavitäten einer Mikrotiterplatte mittels Transmission bereitzustellen, mit denen diese Untersuchungen einfach und genau durchgeführt werden können.

Diese Aufgabe wird gelöst durch eine Transmissionsvorrichtung und ein Verfahren gemäß den unabhängigen Ansprüchen. Die Transmissionsvorrichtung zur Untersuchung von Proben in Kavitäten einer Mikrotiterplatte, beinhaltet eine Beleuchtungseinrichtung und eine mit der Beleuchtungseinrichtung zusammensetzbare Detektionseinrichtung, zwischen denen im zusammengesetzten Zustand der Transmissionsvorrichtung ein Zwischenraum ausgebildet ist, der dazu eingerichtet ist, eine Mikrotiterplatte aufzunehmen, wobei die Beleuchtungseinrichtung wenigstens eine Emissionsquelle aufweist, die ausgebildet ist, von der Emissionsquelle erzeugtes Emissionslicht auf mehrere Teilstrahlengänge aufzuteilen, die im zusammengesetzten Zustand der Transmissionsvorrichtung durch den Zwischenraum verlaufen, wobei die Detektionseinrichtung Detektoreinheiten aufweist, die ausgebildet und angeordnet sind, entlang der Transmissionsstrahlengänge einfallende Lichtsignale separat zu messen, wobei die Beleuchtungseinrichtung und die Detektionseinrichtung so ausgebildet sind, dass zum Zusammensetzen der Transmissionsvorrichtung die Beleuchtungseinrichtung von oben auf die Detektionseinrichtung oder umgekehrt die Detektionseinrichtung auf die Beleuchtungseinrichtung setzbar ist, und die Transmissionsvorrichtung im zusammengesetzten Zustand als geschlossener Messaufbau ausgestaltet ist und eine Mikrotiterplatte ausschließlich in einem geöffneten Zustand der Transmissionsvorrichtung, in dem die Beleuchtungseinrichtung und die Detektionseinrichtung voneinander getrennt sind, von oben in eine nach oben offene und seitlich geschlossene Aufnahme in einer unteren der Beleuchtungseinrichtung und der Detektionseinrichtung einsetzbar ist, die im zusammengesetzten Zustand der Transmissionsvorrichtung einen Teil des Zwischenraums bildet.

Diese Erfindung beruht auf dem Grundgedanken, dass es für die Transmissionsmessung günstig ist, sämtliches Umgebungslicht abzuschirmen. Dies wird mit dem geschlossenen Messaufbau ohne seitlichen Zugang für die Mikrotiterplatten erreicht, in dem auf den winkelabhängigen Filter der vorherigen Lösung verzichtet werden kann. Ein geschlossener Messaufbau kann allerdings keine seitliche Einschuböffnung haben, da diese eine Öffnung im Aufbau darstellt, durch die Licht einbringen kann. Die Mikrotiterplatte kann daher nicht seitlich in die Transmissionsvorrichtung eingeschoben werden. Aus diesem Grund ist die Transmissionsvorrichtung zweiteilig zusammensetzbar ausgebildet mit einer Beleuchtungseinrichtung und einer Detektionseinrichtung, die in der bisherigen offenen Bauweise eine Baueinheit bildeten. Die Beleuchtungseinrichtung und die Detektionseinrichtung sind aus diesem Grund so aufeinander zugeschnitten, dass sie beim Zusammensetzen den Zwischenraum lichtdicht von der Umgebung abschirmen. Der, insbesondere lichtdicht, geschlossene Messaufbau ermöglicht eine einfache und genaue Messung.

In der Transmissionsvorrichtung ist die Beleuchtungseinrichtung von oben auf die Detektionseinrichtung setzbar oder umgekehrt die Detektionseinrichtung auf die Beleuchtungseinrichtung. Im ersten Fall wird Licht von oben durch die Proben in der Mikrotiterplatte geleitet, im zweiten Fall von unten. Die Aufnahme für die Miktrotiterplatte ist in der jeweils unteren Einrichtung der Transmissionsvorrichtung angeordnet.

Vorteilhafterweise weisen die Beleuchtungseinrichtung und die Detektionseinrichtung wenigstens abschnittsweise zueinander komplementäre Formen auf, die beim Zusammensetzen der Transmissionsvorrichtung eine Selbstzentrierung bewirken. Damit ist das Zusammensetzen sehr einfach und wenig fehleranfällig und garantiert so auf einfache Weise die Lichtdichtigkeit der Transmissionsvorrichtung.

In Ausführungsformen weisen die Beleuchtungseinrichtung und die Detektionseinrichtung zueinander komplementäre Formen auf, die aufeinandergelegt oder ineinandergreifend einen lichtdichten Abschluss des Zwischenraums bewirken und/oder Mittel zum Ausschluss von Umgebungslicht aufweisen. Die zueinander komplementären Formen können die Selbstzentrierung unterstützen oder verursachen und sorgen als solche für die Lichtdichtigkeit. Mittel zum Ausschluss von Umgebungslicht können beispielsweise winkelabhängige Filter im Sinne der deutschen Patentanmeldung Nr. 10 2018 111 033.2 sein.

In einer vorteilhaften Weiterbildung weisen die Beleuchtungseinrichtung und die Detektionseinrichtung zueinander passende und/oder komplementäre elektrische, optische und/oder drahtlose Verbindungsmittel auf, wobei die Verbindungsmittel insbesondere als elektrische und/oder optische Steckverbindung oder Steckverbindungen ausgestaltet sind, die beim Zusammensetzen der Transmissionsvorrichtung ineinandergreifen oder aufeinander ausgerichtet werden. Da die Beleuchtungseinrichtung und die Detektionseinrichtung erfindungsgemäß in der zweiteiligen Ausführungsform voneinander getrennt ausgeführt sind, wird durch den Einsatz von Verbindungsmitteln erreicht, dass eine in der Detektionseinrichtung oder der Beleuchtungseinrichtung angeordnete Steuereinheit im zusammengesetzten Zustand der Transmissionsvorrichtung auch die jeweils andere Einheit steuern kann. Auf diese Weise können gleichzeitig die Beleuchtungseinrichtung mit den verschiedenen Beleuchtungsmitteln und die Detektionseinheit mit den speziellen Detektionsanforderungen für jede einzelne Messung gesteuert werden.

Vorzugsweise ist die Detektionseinrichtung dazu ausgebildet, die Lichtsignale für jeden Transmissionsstrahlengang simultan zu messen. Vorteilhaft wird durch eine simultane Messung der Lichtsignale aus mehreren Kavitäten einer Mikrotiterplatte die Dauer für eine Untersuchung der Proben reduziert.

Insbesondere ist für jede Kavität eines vorgebbaren Formats von Mikrotiterplatten jeweils ein Transmissionsstrahlengang vorgesehen. Gemäß einer Ausführungsform ist die Beleuchtungseinrichtung dazu eingerichtet, das von der Emissionsquelle erzeugte Emissionslicht auf wenigstens sechsundneunzig Teilstrahlengänge aufzuteilen, wobei sechsundneunzig der Teilstrahlengänge als Transmissionsstrahlengänge vorgesehen sind und wobei die Detektionseinrichtung sechsundneunzig Detektoreinheiten umfasst. Eine Transmissionsvorrichtung gemäß dieser Ausführungsform kann Proben in allen Kavitäten einer Mikrotiterplatte mit sechsundneunzig Kavitäten simultan untersuchen. Dadurch wird eine Transmissionsvorrichtung bereitgestellt, die raumsparend und kostengünstig ist und Untersuchungen mit geringem Zeitaufwand durchführt.

Es sind ebenfalls alternative Ausführungsformen der Transmissionsvorrichtung vorgesehen, die beispielsweise zur Untersuchung von Proben in einer Mikrotiterplatte mit sechs, zwölf, vierundzwanzig, achtundvierzig, dreihundertvierundachtzig oder eintausendfünfhundertsechsunddreißig Kavitäten ausgestaltet sind. Bei diesen Ausführungsformen entspricht jeweils die Zahl der Transmissionsstrahlengänge und der Detektoreinheiten der Anzahl der Kavitäten der Mikrotiterplatte.

Gemäß einer Ausführungsform sind alle Teilstrahlengänge Transmissionsstrahlengänge. Gemäß einer alternativen Ausführungsform ist wenigstens einer der Teilstrahlengänge ein Referenzstrahlengang, der dazu eingerichtet ist, das Emissionslicht zu einer Referenzdetektoreinheit, die in der Beleuchtungseinrichtung angeordnet ist, zu leiten. In dieser Ausführungsform sind somit nicht alle Teilstrahlengänge Transmissionsstrahlengänge, sondern wenigstens einer der Teilstrahlengänge ist ein Referenzstrahlengang. Mittels des Referenzdetektors lässt sich beispielsweise die Intensität des Emissionslichts messen, wodurch eine Alterung der Emissionsquelle und/oder eine Veränderung der Intensität des Emissionslichts nachweisbar sind.

Der Zwischenraum ist vorzugsweise im Wesentlichen formkomplementär zu der in den Zwischenraum einbringbaren oder befindlichen Mikrotiterplatte. Mit anderen Worten ist der Zwischenraum so ausgestaltet, dass eine Mikrotiterplatte passgenau bzw. formschlüssig aufnehmbar ist, so dass die Abmessungen der Transmissionsvorrichtung klein gehalten werden.

Weiterhin vorzugsweise umfasst die Beleuchtungseinrichtung bevorzugt einen Lichtmischer, der dazu ausgebildet ist, das von der Emissionsquelle erzeugte Emissionslicht zu homogenisieren und mit gleichmäßiger Intensität auf die Teilstrahlengänge zu verteilen, wobei insbesondere der Lichtmischer einen rechteckigen Querschnitt aufweist.

Der Lichtmischer ist beispielsweise ein längserstreckter Körper mit rechteckigem Querschnitt, in dem das Emissionslicht der Emissionsquelle homogenisiert wird. Dadurch wird erreicht, dass die Intensität des Emissionslichts in jedem Teilstrahlengang gleich ist und es zu keiner Verfälschung der Untersuchung durch unterschiedliche Intensitäten kommt.

Gemäß einer bevorzugten Ausführungsform verlaufen die Teilstrahlengänge in der Beleuchtungseinrichtung in jeweils einem Lichtleiter, die mit ihren Eintrittsseiten gebündelt an dem Lichtmischer anliegen, wobei die Lichtleiter, in denen die Transmissionsstrahlengänge verlaufen, dazu eingerichtet sind, einen Anteil des Emissionslichts von dem Lichtmischer zu jeweils einer Emissionsöffnung der Beleuchtungseinrichtung zu leiten, wobei insbesondere die Emissionsöffnungen als Aussparungen in einer Halteplatte ausgebildet sind, wobei insbesondere in den Emissionsöffnungen Kugellinsen angeordnet sind.

Bevorzugt sind die Lichtleiter flexible Kabel, wie beispielsweise Glasfaserkabel oder polymere optische Fasern. Diese Lichtleiter liegen an ihrer Eintrittsseite gebündelt an dem Lichtmischer an, so dass das Emissionslicht gleichmäßig auf alle Lichtleiter übertragen wird. Die Austrittsseiten der Lichtleiter der Transmissionsstrahlengänge liegen an den Emissionsöffnungen an. Diese Emissionsöffnungen sind vorzugsweise zentral oberhalb der Kavitäten angeordnet, so dass das Emissionslicht durch die Lichtleiter geleitet wird und aus den Emissionsöffnungen in die Kavitäten eintritt. Zur Fokussierung des Emissionslichts sind vorzugsweise in den Emissionsöffnungen Kugellinsen vorgesehen.

Weiterhin umfasst die Emissionsquelle bevorzugt wenigstens zwei, insbesondere wenigstens drei, insbesondere wenigstens vier Leuchtdioden, wobei das Emissionslicht der Leuchtdioden im Lichtmischer zusammengeführt wird, wobei zwischen wenigstens einer der Leuchtdioden und dem Lichtmischer ein Interferenzfilter angeordnet ist, wobei insbesondere eine Kugellinse vor und insbesondere eine weitere Kugellinse hinter dem Interferenzfilter angeordnet sind. Beispielhaft kann eine erste Leuchtdiode zur Emission von Emissionslicht mit einer Wellenlänge von 405 nm, eine zweite Leuchtdiode zur Emission von Emissionslicht mit einer Wellenlänge von 450 nm, eine dritte Leuchtdiode zur Emission von Emissionslicht mit einer Wellenlänge von 540 nm und eine vierte Leuchtdiode zur Emission von Emissionslicht mit einer Wellenlänge von 630 nm eingerichtet sein. Die genannten Wellenlängen sind nicht einschränkend zu verstehen. Es können Leuchtdioden verschiedener Wellenlängen benutzt werden, die je nach Messanwendung beispielsweise im ultravioletten, im sichtbaren und/oder im infraroten Bereich liegen können.

Durch die Interferenzfilter werden die Spektren der Wellenlängen des Emissionslichts der Leuchtdioden begrenzt, so dass die Emissionsspektren jeweils schmalbandig sind. Durch die Kugellinsen, die zwischen den Leuchtdioden und den Interferenzfiltern angeordnet sind, wird das Emissionslicht vor dem Eintritt in die Interferenzfilter parallelisiert. Die zwischen den Interferenzfiltern und dem Lichtmischer angeordneten Kugellinsen koppeln das Licht in dem Lichtmischer ein.

Durch die Verwendung von vier Leuchtdioden, die bevorzugt über unterschiedliche Wellenlängen ihres Emissionslichts verfügen, können mit der Transmissionsvorrichtung unterschiedliche Untersuchungen an den Proben in der Mikrotiterplatte durchgeführt werden, ohne dass dafür eine weitere Transmissionsvorrichtung benötigt oder die Leuchtdioden ausgetauscht werden müssten.

Bevorzugt sind die Leuchtdioden horizontal nebeneinander angeordnet. Der Lichtmischer weist bevorzugt für jede Leuchtdiode einen separaten Arm auf, die in Ausbreitungsrichtung des Lichts zusammenlaufen. Alternativ weist die Grundfläche des Lichtmischers eine im Wesentlichen dreieckige Form auf, wobei in diesem Fall eine Seite des Dreiecks zur Einkopplung des Emissionslichts vorgesehen ist und die zwei anderen Seiten in Ausbreitungsrichtung des Lichts zusammenlaufen.

Weiterhin bevorzugt umfasst die Transmissionsvorrichtung Statusleuchten, die an der Außenseite der Transmissionsvorrichtung angeordnet sind und leuchten, wenn die Leuchtdioden Licht emittieren. Insbesondere wird ein Anteil des Emissionslichts jeder Leuchtdiode zur Beleuchtung von jeweils einer Statusleuchte verwendet.

Die Aufgabe wird weiterhin gelöst durch ein Verfahren zum Untersuchen von Proben in Kavitäten einer Mikrotiterplatte mittels Transmission, wobei die Mikrotiterplatte in einem Zwischenraum zwischen einer Beleuchtungseinrichtung und einer Detektionseinrichtung angeordnet wird, wobei Emissionslicht während eines ersten Zeitraums in der Beleuchtungseinrichtung mittels einer Emissionsquelle erzeugt wird, wobei das Emissionslicht in der Beleuchtungseinrichtung auf mehrere Teilstrahlengänge aufgeteilt wird, wobei mehrere der Teilstrahlengänge als Transmissionsstrahlengänge durch jeweils eine Kavität der Mikrotiterplatte zu jeweils einer Detektoreinheit der Detektionseinrichtung verlaufen und wobei während des ersten Zeitraums entlang der Transmissionsstrahlengänge einfallende Lichtsignale mittels der Detektoreinheiten für jeden Transmissionsstrahlengang separat gemessen werden, und wobei zum Anordnen der Mikrotiterplatte in dem Zwischenraum die Beleuchtungseinrichtung von der Detektionseinrichtung getrennt wird, die Mikrotiterplatte von oben in eine nach oben offene und seitlich geschlossene Aufnahme in einer unteren der Beleuchtungseinrichtung und der Detektionseinrichtung eingesetzt wird, die einen Teil des Zwischenraums bildet, und nach dem Einsetzen der Mikrotiterplatte die Beleuchtungseinrichtung mit der Detektionseinrichtung zu einer geschlossenen, und insbesondere lichtdichten, zuvor beschriebenen erfindungsgemäßen Transmissionsvorrichtung zusammengesetzt wird, indem die Beleuchtungseinrichtung von oben auf die Detektionseinrichtung oder umgekehrt die Detektionseinrichtung auf die Beleuchtungseinrichtung gesetzt wird.

Damit werden die mit der zuvor beschriebenen erfindungsgemäßen Transmissionsvorrichtung erzielten Vorteile, Eigenschaften und Merkmale ebenfalls verwirklicht.

Vorzugsweise verläuft durch jede Kavität der Mikrotiterplatte ein Transmissionsstrahlengang, wobei die Lichtsignale für jeden Transmissionsstrahlengang simultan gemessen werden. Somit werden die Lichtsignale für jede Kavität der Mikrotiterplatte separat und simultan gemessen, wodurch das Verfahren mit geringem Zeitaufwand durchführbar ist. Eine Mechanik zum Verfahren der Emissionsquelle oder eines Detektors ist damit überflüssig.

Gemäß einer Ausführungsform wird das Emissionslicht in der Beleuchtungseinrichtung auf wenigstens sechsundneunzig Teilstrahlengänge aufgeteilt, wobei sechsundneunzig der Teilstrahlengänge als Transmissionsstrahlengänge vorgesehen sind und wobei während des ersten Zeitraums entlang der Transmissionsstrahlengänge einfallende Lichtsignale mittels sechsundneunzig Detektoreinheiten für jeden Transmissionsstrahlengang separat gemessen werden. Das Verfahren ist besonders vorteilhaft, wenn Proben in einer Mikrotiterplatte mit einer hohen Anzahl von Kavitäten, wie beispielsweise sechsundneunzig, dreihundertvierundachtzig oder eintausendfünfhundertsechsunddreißig, untersucht werden sollen, da durch die Aufteilung des Emissionslichts der Zeitaufwand besonders stark reduziert wird.

Weiterhin wird vorzugsweise eine Alterung der Emissionsquelle und/oder eine Veränderung der Wellenlängen der Intensität des Emissionslichts der Emissionsquelle mittels einer Referenzmessung gemessen, wobei das Emissionslicht über einen Referenzstrahlengang zu einer Referenzdetektoreinheit geleitet wird, die in der Beleuchtungseinrichtung angeordnet ist und die Intensität des Emissionslichts erfasst, wobei die Intensität des Emissionslichts mit zuvor gemessenen und/oder vorgegebenen Werten für die Intensität des Emissionslichts verglichen wird. Eine solche Referenzmessung kann beispielsweise vor und/oder nach der Untersuchung der Proben durchgeführt werden, um die Alterung der Leuchtdioden zu überwachen und die Qualität der Untersuchung zu überprüfen. Zusätzlich zu der Intensität des Emissionslichts können mittels der Referenzdetektoreinheit weitere Eigenschaften des Emissionslichts untersucht werden, beispielsweise, ob sich eine mittlere Wellenlänge des Emissionslichts einer Leuchtdiode verändert hat.

Weiterhin stellen vorzugsweise die während des ersten Zeitraums gemessenen Lichtsignale eine Lichtmessung dar, wobei während eines zweiten Zeitraums kein Emissionslicht durch die Kavitäten geleitet wird und die während des zweiten Zeitraums gemessenen Lichtsignale eine Dunkelmessung darstellen, wobei für jede Detektoreinheit separat jeweils eine Lichtmessung und jeweils eine Dunkelmessung durchgeführt wird, wobei für jede Detektoreinheit die Dunkelmessung von der Lichtmessung subtrahiert wird. Mit anderen Worten wird während des ersten Zeitraums für jede Detektoreinheit eine Lichtmessung und während des zweiten Zeitraums für jede Detektoreinheit eine Dunkelmessung durchgeführt. Die Mikrotiterplatte ist sowohl während des ersten Zeitraums als auch während des zweiten Zeitraums in dem Zwischenraum angeordnet. Da während des zweiten Zeitraums kein Emissionslicht durch die Kavitäten geleitet wird, entsprechen die während des zweiten Zeitraums gemessenen Lichtsignale einem Hintergrund, der beispielsweise durch Streulicht verursacht wird. Durch Subtrahieren der Dunkelmessung von der Lichtmessung wird somit vorteilhaft der Hintergrund aus den Messungen entfernt und die Qualität der Untersuchungen erhöht. Vorzugsweise sind der erste Zeitraum und der zweite Zeitraum gleich lang. Auf diese Weise kann die Dunkelmessung ohne weitere Umrechnung von der Lichtmessung subtrahiert werden.

Indem die Lichtmessung und die Dunkelmessung für jede Detektoreinheit separat gemessen werden, werden unterschiedliche Streulichtintensitäten am Ort der Detektoreinheiten berücksichtigt. Dadurch kann beispielsweise ausgeglichen werden, dass Detektoreinheiten, die dichter an der Öffnung der Transmissionsvorrichtung angeordnet sind, verstärkt Streulichteinfall ausgesetzt sind.

Weiterhin werden bevorzugt mehrere Messzyklen durchlaufen, wobei in jedem Messzyklus wenigstens eine Lichtmessung und wenigstens eine Dunkelmessung gemessen werden und von jeder in einem Messzyklus gemessenen Lichtmessung eine im selben Messzyklus von derselben Detektoreinheit gemessene Dunkelmessung subtrahiert wird. Beispielsweise besteht ein Messzyklus aus einer einzelnen Lichtmessung und einer einzelnen Dunkelmessung für jede Detektoreinheit, wobei der erste Zeitraum und der zweite Zeitraum jeweils 5 ms betragen. Dieser Messzyklus wird vielfach wiederholt, wobei jeweils das in einem Messzyklus gemessene Dunkelsignal von dem im selben Messzyklus von derselben Detektoreinheit gemessenen Lichtsignal subtrahiert wird. Auf diese Weise ist es möglich, den Einfluss von sich verändernden Streulichtverhältnissen auszugleichen, beispielsweise durch eine flackernde Zimmerbeleuchtung, eine Veränderung der Helligkeit des einfallenden Tageslichts, den Schatten einer vorbeilaufenden Person oder ähnliches. Vorzugsweise ist die Zeitdauer eines Messzyklus möglichst klein, insbesondere zwischen 5 ms und 50 ms, so dass auch hochfrequente Änderungen des Streulichteinfalls bei der Messung berücksichtig werden können.

Gemäß einer weiteren bevorzugten Ausführungsform wird Emissionslicht mit wenigstens zwei, insbesondere wenigstens drei, insbesondere wenigstens vier unterschiedlichen Wellenlängen mittels jeweils einer Leuchtdiode der Emissionsquelle erzeugt, wobei die Bandbreite des Emissionslichts jeder Leuchtdiode mittels jeweils einem Interferenzfilter beschränkt wird, wobei insbesondere eine erste Leuchtdiode Emissionslicht mit einer Wellenlänge von 405 nm, eine zweite Leuchtdiode Emissionslicht mit einer Wellenlänge von 450 nm, eine dritte Leuchtdiode Emissionslicht mit einer Wellenlänge von 540 nm und eine vierte Leuchtdiode Emissionslicht mit einer Wellenlänge von 630 nm emittiert. Die Untersuchung der Proben erfolgt bevorzugt für jede Wellenlänge sequentiell.

Beispielsweise ist es vorgesehen, dass zuerst eine Lichtmessung mit einer ersten Wellenlänge gemessen wird, anschließend eine Dunkelmessung durchgeführt wird. Dies wird für jede Wellenlänge wiederholt, so dass bei vier Wellenlängen insgesamt acht Messungen durchgeführt werden, die zusammen einen Messzyklus bilden. Ebenso ist es möglich, dass nacheinander jeweils die Lichtmessungen mit unterschiedlichen Wellenlängen vorgenommen werden und anschließend eine einzelne Dunkelmessung vorgenommen wird, so dass die vier Lichtmessungen und die Dunkelmessung einen Messzyklus bilden. Alternativ ist es vorgesehen, dass zunächst ein Messzyklus mit der ersten Wellenlänge und einer Dunkelmessung vielfach wiederholt wird und anschließend die Messzyklen mit den weiteren Wellenlängen und jeweils einer Dunkelmessung vielfach wiederholt werden. Vorteilhaft wird mit all diesen Methoden die Untersuchung der wenigstens einen Probe mit unterschiedlichen Wellenlängen durchgeführt, wobei gleichzeitig der Einfluss von Streulicht auf die Untersuchung minimiert wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Transmissionsvorrichtung zur Untersuchung wenigstens einer Probe in einer Mikrotiterplatte,
- Fig. 2: eine schematische Darstellung der Transmissionsvorrichtung in geöffnetem Zustand mit einer Mikrotiterplatte mit sechsundneunzig Kavitäten,
- Fig. 3: eine schematische Darstellung einer Beleuchtungseinrichtung,
- Fig. 4: eine schematische Darstellung einer Detektionseinrichtung und
- Fig. 5: eine schematische Darstellung des inneren Aufbaus einer Beleuchtungseinrichtung umfassend eine Emissionsquelle.

In den Zeichnungen sind jeweils gleiche oder gleichartige Elemente und/oder Teile mit denselben Bezugsziffern versehen, so dass von einer erneuten Vorstellung jeweils abgesehen wird.

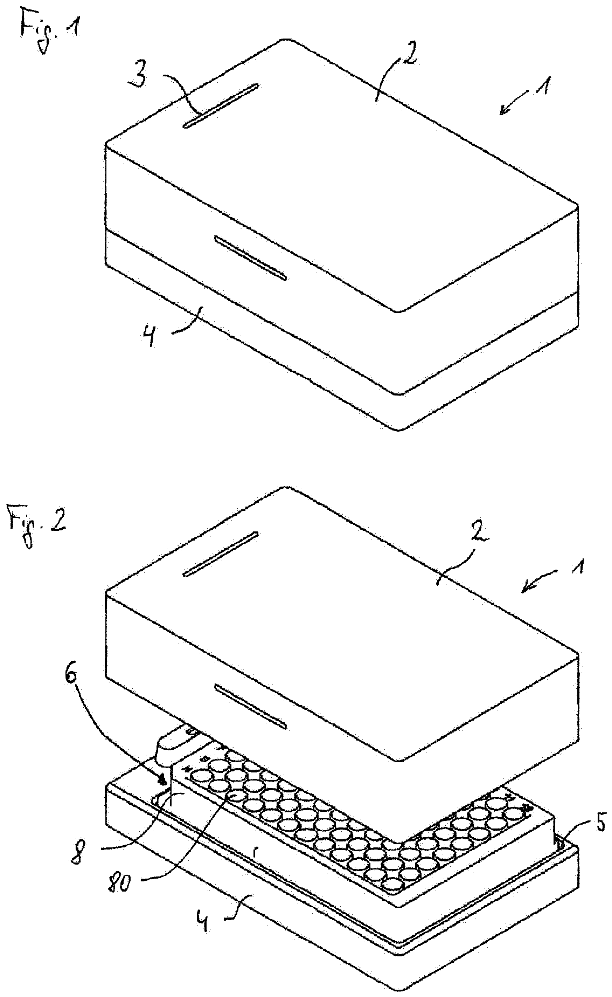

Fig. 1 und 2 zeigen schematisch eine beispielhafte Ausgestaltung einer Transmissionsvorrichtung 1 in geschlossenem Zustand (Fig. 1) bzw. in geöffnetem Zustand (Fig. 2). Die Transmissionsvorrichtung 1 umfasst eine Beleuchtungseinrichtung 2 und eine Detektionseinrichtung 4, zwischen denen sich ein als rechteckige Öffnung bzw. im Wesentlichen quaderförmiger Hohlraum ausgebildeter Zwischenraum 6 befindet. Der Zwischenraum 6 ist so ausgestaltet, dass eine Mikrotiterplatte 8, wie sie in Fig. 2 dargestellt ist, passgenau eingesetzt werden kann. Der Schwerkraft folgend ist die Detektionseinrichtung 4 in der zusammengesetzten Transmissionseinrichtung 1 unten und die Beleuchtungseinrichtung 2 oben angeordnet, letztere wird also auf die Detektionseinrichtung 4 aufgesetzt.

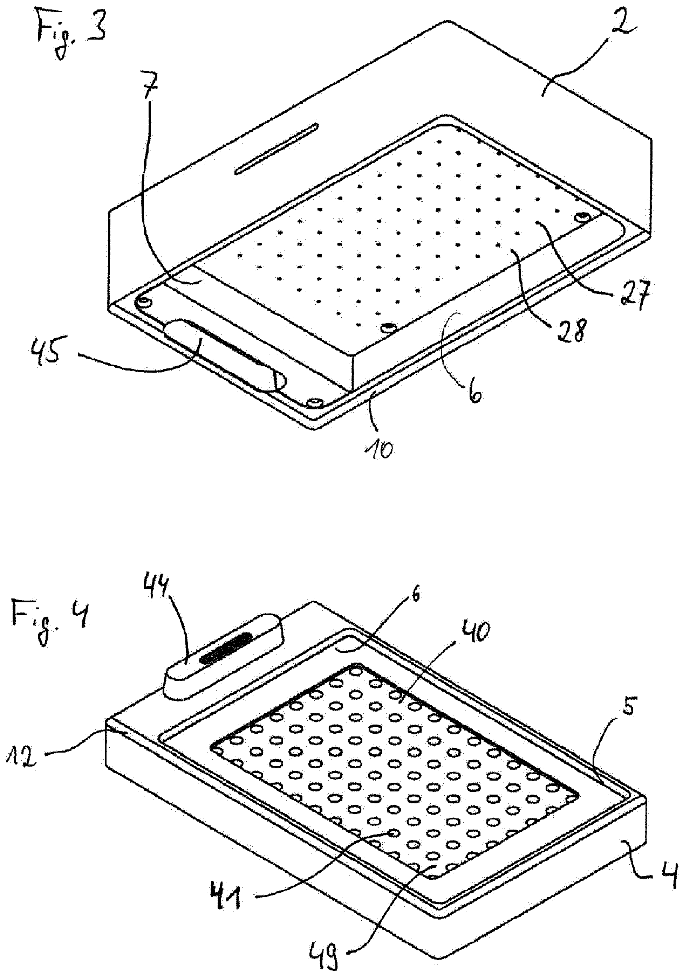

Der Zwischenraum 6 der zusammengesetzten Transmissionseinrichtung 1 wird einerseits aus einer Aufnahme 5 für eine Mikrotiterplatte 8 in der Detektionseinrichtung 4 gebildet und andererseits aus einer Aussparung 7 in der Beleuchtungseinrichtung (vgl. Fig. 3). Die Aufnahme 5 und die Aussparung 7 bilden im zusammengesetzten Zustand der Transmissionsvorrichtung 1 den quaderförmigen Zwischenraum 6, in dem die Mikrotiterplatte 8 aufgenommen wird.

Konkret wird eine Mikrotiterplatte 8 im Ausführungsbeispiel in die Aufnahme 5 der Detektionseinrichtung 4 eingesetzt, worin sie passgenau bzw. formschlüssig gehalten wird. Die Aufnahme 5 ist nach oben offen und seitlich geschlossen. Das Einsetzen erfolgt daher in Schwerkraftsrichtung von oben, also senkrecht zur Erstreckung der Kavitätenebene, in der sich die Kavitäten 80 der Mikrotiterplatte 8 befinden. Ein Verrutschen der Mikrotiterplatte 8 in der Aufnahme 5 ist durch die seitlich geschlossene Halterung in der Aufnahme 5 ebenso ausgeschlossen wie eine seitliche Entnahme der Mikrotiterplatte 8 oder ein Einsatz der Mikrotiterplatte 8 von einer Seite her. Das Einsetzen und Entnehmen von Mikrotiterplatten ist somit nur möglich, wenn die Beleuchtungseinrichtung 2 von der Detektionseinrichtung 4 getrennt ist und der Zugang zur Aufnahme 5 der Detektionseinrichtung von oben frei ist.

In Fig. 2 ist ein Zustand dargestellt, in dem die Mikrotiterplatte 8 gerade in die Aufnahme 5 der Detektionsvorrichtung 4 eingesetzt wird, aber noch nicht vollständig darin aufgenommen ist. Der Endzustand der vollständig in die Aufnahme 5 eingesetzten Mikrotiterplatte 8 ist in Fig. 4 dargestellt.

Die Abmessungen des Zwischenraums 6 bzw. der Aussparung 5 entsprechen also im Wesentlichen den seitlichen Abmessungen der Mikrotiterplatte 8, wodurch die Transmissionsvorrichtung 1 einen kompakten Aufbau aufweist. Weiterhin umfasst die Transmissionsvorrichtung 1 Statusleuchten 3. Diese Statusleuchten 3 sind jeweils einer in der Beleuchtungseinrichtung 2 angeordneten Leuchtdiode zugeordnet, die in Fig. 1 und 2 verdeckt sind. Emittiert eine der Leuchtdioden Licht, so leuchtet auch die zugeordnete Statusleuchte 3.

Bei der in Fig. 2 beispielhaft dargestellten Mikrotiterplatte 8 handelt es sich um ein Format mit sechsundneunzig Kavitäten 80, von denen nur eine Kavität 80 mit einem Bezugszeichen versehen ist. In diesen Kavitäten 80 werden die zu untersuchenden Proben angeordnet, bevor die Mikrotiterplatte 8 in den Zwischenraum 6 eingeschoben wird. Da die Abmessungen von Mikrotiterplatten 8 einem ANSI-Standard genügen, kann der Zwischenraum 6 formkomplementär zu diesen Abmessungen ausgestaltet werden.

Fig. 3 zeigt eine schematische Darstellung der Beleuchtungseinrichtung 2, wobei in Fig. 3 eine Darstellung aus einem Blickwinkel von schräg unten gewählt wurde. Direkt oberhalb der eingesetzten Mikrotiterplatte 8 (vgl. Fig. 2) ist eine Halteplatte 28 angeordnet, die eine Anzahl von Emissionsöffnungen 27 aufweist, von denen nur eine mit einem Bezugszeichen versehen ist. Die Zahl der Emissionsöffnungen 27 entspricht der Zahl der Kavitäten 80 der Mikrotiterplatte 8. In dem in Fig. 3 gezeigten Beispiel sind also sechsundneunzig Emissionsöffnungen 27 vorhanden. Die Emissionsöffnungen 27 sind so angeordnet, dass im eingeschobenen Zustand der Mikrotiterplatte 8 jede Emissionsöffnung 27 zentral über einer Kavität 80 angeordnet ist. Die Erfindung ist nicht auf die genaue Anzahl von Kavitäten und Transmissionskanälen beschränkt. Ebenfalls bezeichnet ist die Aussparung 7 in der Beleuchtungseinrichtung 2, die den oberen Teil des Zwischenraums 6 der Transmissionsvorrichtung 1 darstellt.

In Fig. 4 ist schematisch eine Detektionseinrichtung 4 dargestellt, die unterhalb der Beleuchtungseinrichtung 2 und der eingesetzten Mikrotiterplatte 8 angeordnet wird. In einem Bereich der Oberfläche der Detektionseinrichtung 4, der im Wesentlichen der Fläche der eingeschobenen Mikrotiterplatte 8 entspricht, ist eine Detektorplatte 49 angeordnet ist, die eine Reihe von Detektoröffnungen 41 aufweist, die jeweils zentral unterhalb der Emissionsöffnungen 27 und der Kavitäten 80 angeordnet sind. In jeder dieser Detektoröffnungen 41 ist eine Detektoreinheit mit jeweils wenigstens einem Detektor 40 angeordnet, die durch die Perspektive in Fig. 4 verdeckt sind. Bei den Detektoren 40 handelt es sich beispielsweise um Photodioden mit Empfindlichkeiten in unterschiedlichen Wellenlängenbereichen. Um das Emissionslicht bzw. die Lichtsignale auf die Detektoren 40 zu fokussieren, können in den Öffnungen jeweils Kugellinsen angeordnet sein oder werden.

Die in Fig. 3 dargestellte Beleuchtungseinrichtung 2 und die in Fig. 4 dargestellte Detektionseinrichtung 4 weisen mehrere zueinander komplementäre Strukturen auf. Die Gehäuse der Beleuchtungseinrichtung 2 und der Detektionseinrichtung 4 weisen jeweils an ihrem Rand umlaufend komplementäre Randkonturen 10, 12 auf, die im zusammengesetzten Zustand auf- oder ineinanderpassen und auf diese Weise das Eindringen von Umgebungslicht verhindern. Damit handelt es sich bei der Transmissionsvorrichtung 1 im geschlossenen Zustand um einen geschlossenen Messaufbau, in dem der Zwischenraum 6 lichtdicht von der Umgebung abgeschirmt ist. Ferner weisen die beispielhaft gezeigte Beleuchtungseinrichtung 2 und Detektionseinrichtung 4 zueinander komplementäre Steckverbindungen 44, 45 auf, mit denen beim Zusammensetzen eine elektrische und/oder optische Verbindung hergestellt wird. Dabei handelt es sich um ein weibliches Steckerteil 45 in der Beleuchtungseinheit 2 und um ein männliches Steckerteil 44 in der Detektionseinheit 4. Die umgekehrte Konfiguration ist ebenso möglich. Diese Konfiguration aus Stecker und Dose hat einerseits wiederum eine selbstzentrierende Wirkung und bei optischen Verbindungen den Vorteil, dass Streulicht aus den Grenzflächen der optischen Verbindung nicht ungehindert in den Zwischenraum 6 der Transmissionsvorrichtung 1 gelangt und die Messung stört.

Mit diesem Aufbau ist es möglich, die Transmissionsvorrichtung 1 mittels Roboterarmen und -greifern eines Automated-Liquid-Handling- bzw. Robotersystems handzuhaben und für Transmissionsmessungen vorzubereiten. Dazu können ein oder mehrere Greifarme die obere Beleuchtungseinrichtung 2 ergreifen, von der Detektionseinrichtung 4 trennen und zur Seite stellen, eine vorbereitete Mikrotiterplatte 8 einsetzen, die Transmissionsvorrichtung 1 wieder schließen und in eine Wärmekammer oder einen Messofen einsetzen. Dies alles kann automatisch mittels Robotik erfolgen. Auf diese Weise kann die Messvorrichtung im Automated-Liquid-Handling-System platziert werden, während bislang solche Messvorrichtungen außerhalb des Robotersystems platziert werden mussten, so dass mehr Platz beansprucht wurde.

In dem in den Fig. 1 bis 4 dargestellten Ausführungsbeispiel ist die Beleuchtungseinrichtung 2 oben und die Detektionseinrichtung 4 unten angeordnet, das zur Transmissionsmessung verwendete Licht wird von oben in die Proben eingestrahlt und unten detektiert. Der Aufbau kann allerdings auch umgekehrt ausgeführt sein. In dem Fall befindet sich die Beleuchtungseinrichtung 2 unten und die Detektionsvorrichtung 4 oben, die Durchstrahlung erfolgt von unten. In dem Fall ist die Aufnahme 5 für die Mikrotiterplatte 8 in der Beleuchtungseinrichtung 2 angeordnet.

Die Mikrotiterplatte 8 kann, wie in Fig. 4 gezeigt, vollständig in der Aufnahme 5 aufgenommen werden. Es ist allerdings im Rahmen der vorliegenden Erfindung alternativ auch vorgesehen, dass die Tiefe der Aufnahme 5 kleiner ist als die Dicke der Mikrotiterplatte 8, so dass diese in die Aussparung 7 der oberen Einrichtung, im gezeigten Fall der Beleuchtungseinrichtung 2, hineinragt.

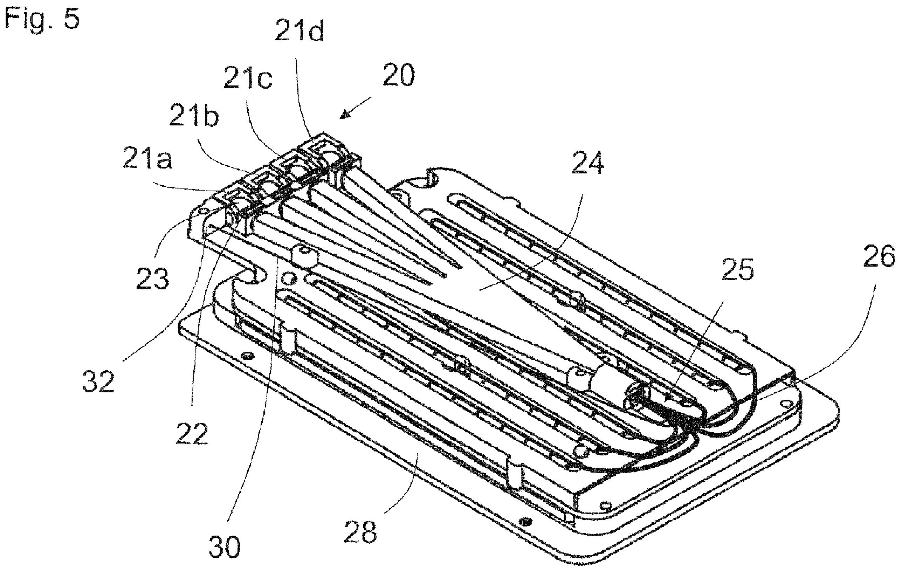

Der innere Aufbau der Beleuchtungseinrichtung 2 ist in der Fig. 5 dargestellt. Die in Fig. 5 gewählte Ansicht entspricht der Ansicht in Fig. 1, so dass die in Fig. 5 verdeckte Unterseite der Halteplatte 28 der in Fig. 3 gezeigten Unterseite der Halteplatte 28 entspricht. Die Beleuchtungseinrichtung 2 weist eine Emissionsquelle 20 auf, die in dem in Fig. 5 gezeigten Beispiel vier Leuchtdioden 21a, 21b, 21c, 21d umfasst. Beispielsweise hat das Emissionslicht der Leuchtdiode 21a ein Maximum bei einer Wellenlänge von 405 nm, das Emissionslicht der Leuchtdiode 21b bei einer Wellenlänge von 450 nm, das Emissionslicht der Leuchtdiode 21c bei einer Wellenlänge von 540 nm und das Emissionslicht der Leuchtdiode 21d bei einer Wellenlänge von 630 nm. Das Vorsehen von mehreren Leuchtdioden mit unterschiedlichen Wellenlängenbereichen ermöglicht es, verschiedene Untersuchungen mit derselben Transmissionsvorrichtung 1 durchzuführen.

Direkt hinter den Leuchtdioden 21a bis 21d ist jeweils eine Kugellinse 23 angeordnet, die das austretende Emissionslicht parallelisiert. Hinter jeder Kugellinse 23 ist jeweils ein Interferenzfilter 22 angeordnet, der das Wellenlängenspektrum des Emissionslichts der Leuchtdioden 21a bis 21d einschränkt. Gemäß einer weiteren, nicht in Fig. 4 gezeigten Ausführungsform, ist hinter jedem Interferenzfilter 22 eine weitere Kugellinse angeordnet, die das Emissionslicht fokussiert.

Hinter den Interferenzfiltern 22 bzw. den weiteren Kugellinsen ist ein Lichtmischer 24 angeordnet. Dieser Lichtmischer 24 homogenisiert das einfallende Emissionslicht, so dass es sich mit einer gleichmäßigen Intensität im Querschnitt des Lichtmischers 24 verteilt. Dazu weist der Lichtmischer 24 gemäß der in Fig. 5 gezeigten Ausführungsform vorteilhafterweise einen rechteckigen Querschnitt auf. Ist nur eine einzelne Leuchtdiode 21a vorgesehen, so hat der Lichtmischer 24 beispielsweise die Form eines Stabes mit rechteckigem Querschnitt. Sind hingegen mehrere Leuchtdioden 21a bis 21d vorgesehen, wie in Fig. 5 gezeigt, so führt der Lichtmischer 24 das Emissionslicht der Leuchtdioden 21a bis 21d zusammen. Dies kann beispielsweise, wie in Fig. 5 gezeigt, mittels vier zusammenlaufenden Armen geschehen. Alternativ kann der Lichtmischer 24 eine im Wesentlichen dreieckige Grundfläche aufweisen, bei der im Vergleich zu der in Fig. 5 gezeigten Ausführungsform die Fläche zwischen den Armen ausgefüllt ist.

In Fig. 5 sind auch Teilstrahlengänge 25 schematisch dargestellt, auf die das aus dem Lichtleiter 24 austretende Emissionslicht der Leuchtdioden 21a bis 21d aufgeteilt wird. Dazu ist am Ausgang des Lichtmischers 24 ein Bündel von Lichtleitern 26 angeordnet, in die jeweils ein Anteil des Emissionslichts gleichmäßig eingekoppelt wird. Von dem Ausgang des Lichtmischers 24 führen diese Lichtleiter 26 jeweils zu einer Emissionsöffnung 27, in denen zur weiteren Fokussierung des Emissionslichts jeweils eine nicht gezeigte Kugellinse angeordnet ist. Diejenigen Teilstrahlengänge 25, die in den Lichtleitern 26 zu den Emissionsöffnungen 27 verlaufen, sind Transmissionsstrahlengänge. Ein optional vorhandener weiterer Lichtleiter 26 führt als Referenzstrahlengang 30 zurück zu einer Referenzdetektoreinheit 32, die neben den Leuchtdioden 21a bis 21d angeordnet ist. Mithilfe dieser optionalen Referenzdetektoreinheit 32 lässt sich die Alterung der Leuchtdioden 21a bis 21d und/oder eine Veränderung der Intensität des Emissionslichts untersuchen.

In einer Gesamtbetrachtung der Fig. 3, 4 und 5 verlaufen die Transmissionsstrahlengänge jeweils ausgehend von dem Lichtmischer 24 durch einen Lichtleiter 26, eine Emissionsöffnung 27 und den Zwischenraum 6 bzw. eine Kavität 80 zu einem Detektor 40 bzw. einer Detektoreinheit. Nach dem Austritt aus den Emissionsöffnungen 27 verlaufen die Transmissionsstrahlengänge parallel zueinander.

### Bezugszeichenliste

- 1: Transmissionsvorrichtung
- 2: Beleuchtungseinrichtung
- 3: Statusleuchte
- 4: Detektionseinrichtung
- 5: Aufnahme
- 6: Zwischenraum
- 7: Aussparung
- 8: Mikrotiterplatte
- 10, 12: komplementäre Randkontur
- 20: Emissionsquelle
- 21a, 21b, 21c, 21d: Leuchtdiode
- 22: Interferenzfilter
- 23: Kugellinse
- 24: Lichtmischer
- 25: Teilstrahlengänge
- 26: Lichtleiter
- 27: Emissionsöffnung
- 28: Halteplatte
- 30: Referenzstrahlengang
- 32: Referenzdetektor
- 40: Detektor
- 41: Detektoröffnung
- 44: Steckverbindung männlich
- 45: Steckverbindung weiblich
- 49: Detektorplatte
- 80: Kavität

## Patentansprüche

1. Transmissionsvorrichtung (1) zur Untersuchung von Proben in Kavitäten (80) einer Mikrotiterplatte (8), umfassend eine Beleuchtungseinrichtung (2) und eine mit der Beleuchtungseinrichtung zusammensetzbare Detektionseinrichtung (4), zwischen denen im zusammengesetzten Zustand der Transmissionsvorrichtung (1) ein Zwischenraum (6) ausgebildet ist, der dazu eingerichtet ist, eine Mikrotiterplatte (8) aufzunehmen, wobei die Beleuchtungseinrichtung (2) wenigstens eine Emissionsquelle (20) aufweist, die ausgebildet ist, von der Emissionsquelle (20) erzeugtes Emissionslicht auf mehrere Teilstrahlengänge (25) aufzuteilen, die im zusammengesetzten Zustand der Transmissionsvorrichtung durch den Zwischenraum (6) verlaufen, wobei die Detektionseinrichtung (4) Detektoreinheiten aufweist, die ausgebildet und angeordnet sind, entlang der Transmissionsstrahlengänge einfallende Lichtsignale separat zu messen, wobei die Beleuchtungseinrichtung (2) und die Detektionseinrichtung (4) so ausgebildet sind, dass zum Zusammensetzen der Transmissionsvorrichtung (1) die Beleuchtungseinrichtung (2) von oben auf die Detektionseinrichtung (4) oder umgekehrt die Detektionseinrichtung (4) auf die Beleuchtungseinrichtung (2) setzbar ist, und die Transmissionsvorrichtung (1) im zusammengesetzten Zustand als geschlossener Messaufbau ausgestaltet ist und eine Mikrotiterplatte (8) ausschließlich in einem geöffneten Zustand der Transmissionsvorrichtung (1), in dem die Beleuchtungseinrichtung (2) und die Detektionseinrichtung (4) voneinander getrennt sind, von oben in eine nach oben offene und seitlich geschlossene Aufnahme (5) in einer unteren der Beleuchtungseinrichtung (2) und der Detektionseinrichtung (4) einsetzbar ist.

2. Transmissionsvorrichtung (1) nach Anspruch 1, **dadurch gekennzeichnet, dass** die Beleuchtungseinrichtung (2) und die Detektionseinrichtung (4) wenigstens abschnittsweise zueinander komplementäre Formen aufweisen, die beim Zusammensetzen der Transmissionsvorrichtung (1) eine Selbstzentrierung bewirken und/oder dass die Beleuchtungseinrichtung (2) und die Detektionseinrichtung (4) zueinander komplementäre Formen aufweisen, die aufeinandergelegt oder ineinandergreifend einen, insbesondere lichtdichten, Abschluss des Zwischenraums (6) bewirken und/oder Mittel zum Ausschluss von Umgebungslicht aufweisen.

3. Transmissionsvorrichtung (1) nach Anspruch 1 oder 2, **dadurch gekennzeichnet, dass** die Beleuchtungseinrichtung (2) und die Detektionseinrichtung (4) zueinander passende und/oder komplementäre elektrische, optische und/oder drahtlose Verbindungsmittel aufweisen, wobei die Verbindungsmittel insbesondere als elektrische und/oder optische Steckverbindung oder Steckverbindungen (44, 45) ausgestaltet sind, die beim Zusammensetzen der Transmissionsvorrichtung (1) ineinandergreifen oder aufeinander ausgerichtet werden.

4. Transmissionsvorrichtung (1) nach einem der Ansprüche 1 bis 3, **dadurch gekennzeichnet, dass** die Detektionseinrichtung (4) dazu ausgebildet ist, die Lichtsignale für jeden Transmissionsstrahlengang simultan zu messen.

5. Transmissionsvorrichtung (1) nach einem der Ansprüche 1 bis 4, **dadurch gekennzeichnet, dass** die Beleuchtungseinrichtung (2) dazu eingerichtet ist, das von der Emissionsquelle (20) erzeugte Emissionslicht auf wenigstens sechsundneunzig Teilstrahlengänge (25) aufzuteilen, wobei sechsundneunzig der Teilstrahlengänge (25) als Transmissionsstrahlengänge vorgesehen sind und wobei die Detektionseinrichtung (4) sechsundneunzig Detektoreinheiten umfasst.

6. Transmissionsvorrichtung (1) nach einem der Ansprüche 1 bis 5, **dadurch gekennzeichnet, dass** wenigstens einer der Teilstrahlengänge (25) ein Referenzstrahlengang (30) ist, der dazu eingerichtet ist, das Emissionslicht zu einer Referenzdetektoreinheit (32), die in der Beleuchtungseinrichtung (2) angeordnet ist, zu leiten.

7. Transmissionsvorrichtung (1) nach einem der Ansprüche 1 bis 6, **dadurch gekennzeichnet, dass** der Zwischenraum (6) im Wesentlichen formkomplementär zu der in den Zwischenraum (6) einbringbaren oder befindlichen Mikrotiterplatte (8) ist.

8. Transmissionsvorrichtung (1) nach einem der Ansprüche 1 bis 7, **dadurch gekennzeichnet, dass** die Beleuchtungseinrichtung (2) einen Lichtmischer (24) umfasst, der dazu ausgebildet ist, das von der Emissionsquelle (20) erzeugte Emissionslicht zu homogenisieren und mit gleichmäßiger Intensität auf die Teilstrahlengänge (25) zu verteilen, wobei insbesondere der Lichtmischer (24) einen rechteckigen Querschnitt aufweist, wobei insbesondere die Teilstrahlengänge (25) in der Beleuchtungseinrichtung (2) in jeweils einem Lichtleiter (26) verlaufen, die mit ihren Eintrittsseiten gebündelt an dem Lichtmischer (24) anliegen, wobei die Lichtleiter (24), in denen die Transmissionsstrahlengänge verlaufen, dazu eingerichtet sind, einen Anteil des Emissionslichts von dem Lichtmischer (24) zu jeweils einer Emissionsöffnung (27) der Beleuchtungseinrichtung (2) zu leiten, wobei insbesondere die Emissionsöffnungen (27) als Aussparungen in einer Halteplatte (28) ausgebildet sind, wobei insbesondere in den Emissionsöffnungen (27) Kugellinsen angeordnet sind.

9. Transmissionsvorrichtung (1) nach Anspruch 8, **dadurch gekennzeichnet, dass** die Emissionsquelle (20) wenigstens zwei, insbesondere wenigstens drei, insbesondere wenigstens vier Leuchtdioden (21a, 21b, 21c, 21d) umfasst, wobei das Emissionslicht der Leuchtdioden (21a, 21b, 21c, 21d) im Lichtmischer (24) zusammengeführt wird, wobei zwischen wenigstens einer der Leuchtdioden (21a, 21b, 21c, 21d) und dem Lichtmischer (24) ein Interferenzfilter (22) angeordnet ist, wobei insbesondere eine Kugellinse (23) vor und insbesondere eine weitere Kugellinse hinter dem Interferenzfilter (22) angeordnet sind.

10. Verfahren zum Untersuchen von Proben in Kavitäten (80) einer Mikrotiterplatte (8) mittels Transmission, wobei die Mikrotiterplatte (8) in einem Zwischenraum (6) zwischen einer Beleuchtungseinrichtung (2) und einer Detektionseinrichtung (4) angeordnet wird, wobei Emissionslicht während eines ersten Zeitraums in der Beleuchtungseinrichtung (2) mittels einer Emissionsquelle (20) erzeugt wird, wobei das Emissionslicht in der Beleuchtungseinrichtung (2) auf mehrere Teilstrahlengänge (25) aufgeteilt wird, wobei mehrere der Teilstrahlengänge (25) als Transmissionsstrahlengänge durch jeweils eine Kavität (80) der Mikrotiterplatte (8) zu jeweils einer Detektoreinheit der Detektionseinrichtung (4) verlaufen und wobei während des ersten Zeitraums entlang der Transmissionsstrahlengänge einfallende Lichtsignale mittels der Detektoreinheiten für jeden Transmissionsstrahlengang separat gemessen werden, wobei zum Anordnen der Mikrotiterplatte (8) in dem Zwischenraum (6) die Beleuchtungseinrichtung (2) von der Detektionseinrichtung (4) getrennt wird, die Mikrotiterplatte (8) von oben in eine nach oben offene und seitlich geschlossene Aufnahme (5) in einer unteren der Beleuchtungseinrichtung (2) und der Detektionseinrichtung (4) eingesetzt wird, die einen Teil des Zwischenraums (6) bildet, und nach dem Einsetzen der Mikrotiterplatte (8) die Beleuchtungseinrichtung (2) mit der Detektionseinrichtung (4) zu einer geschlossenen, und insbesondere lichtdichten, Transmissionsvorrichtung (1) nach einem der Ansprüche 1 bis 11 zusammengesetzt wird, indem die Beleuchtungseinrichtung (2) von oben auf die Detektionseinrichtung (4) oder umgekehrt die Detektionseinrichtung (4) auf die Beleuchtungseinrichtung (2) gesetzt wird.

11. Verfahren nach Anspruch 10, **dadurch gekennzeichnet, dass** durch jede Kavität (80) der Mikrotiterplatte (8) ein Transmissionsstrahlengang verläuft, wobei die Lichtsignale für jeden Transmissionsstrahlengang simultan gemessen werden.

12. Verfahren nach Anspruch 10 oder 11, **dadurch gekennzeichnet, dass** das Emissionslicht in der Beleuchtungseinrichtung (2) auf wenigstens sechsundneunzig Teilstrahlengänge (25) aufgeteilt wird, wobei sechsundneunzig der Teilstrahlengänge (25) als Transmissionsstrahlengänge vorgesehen sind und wobei während des ersten Zeitraums entlang der Transmissionsstrahlengänge einfallende Lichtsignale mittels sechsundneunzig Detektoreinheiten für jeden Transmissionsstrahlengang separat gemessen werden.

13. Verfahren nach einem der Ansprüche 10 bis 12, **dadurch gekennzeichnet, dass** eine Alterung der Emissionsquelle (20) und/oder eine Veränderung der Wellenlängen der Intensität des Emissionslichts der Emissionsquelle (20) mittels einer Referenzmessung gemessen wird, wobei das Emissionslicht über einen Referenzstrahlengang (30) zu einer Referenzdetektoreinheit (32) geleitet wird, die in der Beleuchtungseinrichtung (2) angeordnet ist und die Intensität des Emissionslichts erfasst, wobei die Intensität des Emissionslichts mit zuvor gemessenen und/ oder vorgegebenen Werten für die Intensität des Emissionslichts verglichen wird.

14. Verfahren nach einem der Ansprüche 10 bis 13, **dadurch gekennzeichnet, dass** die während des ersten Zeitraums gemessenen Lichtsignale eine Lichtmessung darstellen, wobei während eines zweiten Zeitraums kein Emissionslicht durch die Kavitäten geleitet wird und die während des zweiten Zeitraums gemessenen Lichtsignale eine Dunkelmessung darstellen, wobei für jede Detektoreinheit separat jeweils eine Lichtmessung und jeweils eine Dunkelmessung durchgeführt wird, wobei für jede Detektoreinheit die Dunkelmessung von der Lichtmessung subtrahiert wird, wobei insbesondere mehrere Messzyklen durchlaufen werden, wobei in jedem Messzyklus wenigstens eine Lichtmessung und wenigstens eine Dunkelmessung gemessen werden und von jeder in einem Messzyklus gemessenen Lichtmessung eine im selben Messzyklus von derselben Detektoreinheit gemessene Dunkelmessung subtrahiert wird.

15. Verfahren nach einem der Ansprüche 10 bis 14, **dadurch gekennzeichnet, dass** Emissionslicht mit wenigstens zwei, insbesondere wenigstens drei, insbesondere wenigstens vier unterschiedlichen Wellenlängen mittels jeweils einer Leuchtdiode (21a, 21b, 21c, 21d) der Emissionsquelle (20) erzeugt wird, wobei die Bandbreite des Emissionslichts jeder Leuchtdiode (21a, 21b, 21c, 21d) mittels jeweils einem Interferenzfilter (22) beschränkt wird, wobei insbesondere eine erste Leuchtdiode (21a) Emissionslicht mit einer Wellenlänge von 405 nm, eine zweite Leuchtdiode (21b) Emissionslicht mit einer Wellenlänge von 450 nm, eine dritte Leuchtdiode (21c) Emissionslicht mit einer Wellenlänge von 540 nm und eine vierte Leuchtdiode (21d) Emissionslicht mit einer Wellenlänge von 630 nm emittiert, wobei insbesondere die Untersuchung der Proben für jede Wellenlänge sequentiell erfolgt.

## Claims

1. A transmission device (1) for examining samples in cavities (80) of a microtiter plate (8), comprising an illumination device (2) and a detection device (4), which can be assembled with the illumination device, between which an intermediate space (6) is configured, in the assembled state of the transmission device (1), which intermediate space is designed to receive a microtiter plate (8), wherein the illumination device (2) has at least one emission source (20) which is configured to split emission light generated by the emission source (20) among multiple partial beam paths (25) which extend through the intermediate space (6) in the assembled state of the transmission device, wherein the detection device (4) has detector units which are configured and arranged to measure light signals incident along the transmission beam paths separately, wherein the illumination device (2) and the detection device (4) are configured so that, in order to assemble the transmission device (1), the illumination device (2) can be placed from above onto the detection device (4) or conversely the detection device (4) can be placed onto the illumination device (2), and the transmission device (1), in the assembled state, is embodied as a closed measurement assembly, and a microtiter plate (8) can be inserted, exclusively in an open state of the transmission device (1) in which the illumination device (2) and the detection device (4) are separated from one another, from above into a receptacle (5) which is open at the top and is laterally closed in the lower one of the illumination device (2) and the detection device (4).

2. The transmission device (1) according to Claim 1, **characterized in that** the illumination device (2) and the detection device (4) have shapes which complement one another, at least in sections, which bring about a self-centering when the transmission device (1) is assembled, and/or **in that** the illumination device (2) and the detection device (4) have shapes which complement one another which, when placed on top of one another or engaging with one another, bring about a closure of the intermediate space (6), which is in particular lightproof, and/or have means for excluding ambient light.

3. The transmission device (1) according to Claim 1 or 2, **characterized in that** the illumination device (2) and the detection device (4) have electrical, optical and/or wireless connection means which match and/or complement one another, wherein the connection means are in particular embodied as an electrical and/or optical plug-in connection or as electrical and/or optical plug-in connections (44, 45) which engage with one another or are aligned with one another when the transmission device (1) is assembled.

4. The transmission device (1) according to any one of Claims 1 to 3, **characterized in that** the detection device (4) is configured to measure the light signals simultaneously for each transmission beam path.

5. The transmission device (1) according to any one of Claims 1 to 4, **characterized in that** the illumination device (2) is designed to split the emission light generated by the emission source (20) among at least ninety-six partial beam paths (25), wherein ninety-six of the partial beam paths (25) are provided as transmission beam paths and wherein the detection device (4) comprises ninety-six detector units.

6. The transmission device (1) according to any one of Claims 1 to 5, **characterized in that** at least one of the partial beam paths (25) is a reference beam path (30) which is designed to guide the emission light to a reference detector unit (32) which is arranged in the illumination device (2).

7. The transmission device (1) according to any one of Claims 1 to 6, **characterized in that** the intermediate space (6) substantially complements the shape of the microtiter plate (8) which can be introduced into or is located in the intermediate space (6).

8. The transmission device (1) according to any one of Claims 1 to 7, **characterized in that** the illumination device (2) comprises a light mixer (24) which is configured to homogenize the emission light generated by the emission source (20) and to distribute it with equal intensity among the partial beam paths (25), wherein in particular the light mixer (24) has a rectangular cross-section, wherein in particular the partial beam paths (25) in the illumination device (2) each extend in an optical light guide (26), an entry side of each optical light guide adjoins the light mixer (24) so as to be bundled together, wherein the light guides (24) in which the transmission beam paths extend are designed to guide a portion of the emission light from the light mixer (24) to, in each case, an emission opening (27) of the illumination device (2), wherein in particular the emission openings (27) are configured as cut-outs in a holding plate (28), wherein spherical lenses are arranged in the emission openings (27) in particular.

9. The transmission device (1) according to Claim 8, **characterized in that** the emission source (20) comprises at least two, in particular at least three, in particular at least four light-emitting diodes (21a, 21b, 21c, 21d), wherein the emission light from the light-emitting diodes (21a, 21b, 21c, 21d) is gathered in the light mixer (24), wherein an interference filter (22) is arranged between at least one of the light-emitting diodes (21a, 21b, 21c, 21d) and the light mixer (24), wherein in particular a spherical lens (23) is arranged in front of, and in particular a further spherical lens is arranged behind, the interference filter (22).

10. A method for examining samples in cavities (80) of a microtiter plate (8) by means of transmission, wherein the microtiter plate (8) is arranged in an intermediate space (6) between an illumination device (2) and a detection device (4), wherein emission light is generated by means of an emission source (20) in the illumination device (2) during a first period of time, wherein the emission light in the illumination device (2) is split among multiple partial beam paths (25), wherein multiple of the partial beam paths (25) extend as transmission beam paths through, in each case, a cavity (80) of the microtiter plate (8) to, in each case, a detector unit of the detection device (4), and wherein light signals incident along the transmission beam paths are measured separately for each transmission beam path by means of the detector units during the first period of time, wherein in order to arrange the microtiter plate (8) in the intermediate space (6), the illumination device (2) is separated from the detection device (4), the microtiter plate (8) is inserted from above into a receptacle (5) which is open at the top and is laterally closed in the lower one of the illumination device (2) and the detection device (4), which forms part of the intermediate space (6), and following the insertion of the microtiter plate (8), the illumination device (2) is assembled with the detection device (4) to form a closed transmission device (1), which is in particular lightproof, according to any one of Claims 1 to 11, by placing the illumination device (2) from above onto the detection device (4) or, conversely, by placing the detection device (4) onto the illumination device (2).

11. The method according to Claim 10, **characterized in that** a transmission beam path extends through each cavity (80) of the microtiter plate (8), wherein the light signals are measured simultaneously for each transmission beam path.

12. The method according to Claim 10 or 11, **characterized in that** the emission light in the illumination device (2) is split among at least ninety-six partial beam paths (25), wherein ninety-six of the partial beam paths (25) are provided as transmission beam paths and wherein light signals incident along the transmission beam paths are measured separately for each transmission beam path by means of ninety-six detector units during the first period of time.

13. The method according to any one of Claims 10 to 12, **characterized in that** an aging of the emission source (20) and/or a change in the wavelengths of the intensity of the emission light from the emission source (20) is measured by means of a reference measurement, wherein the emission light is guided via a reference beam path (30) to a reference detector unit (32) which is arranged in the illumination device (2) and captures the intensity of the emission light, wherein the intensity of the emission light is compared with previously measured and/or predefined values for the intensity of the emission light.

14. The method according to any one of Claims 10 to 13, **characterized in that** the light signals measured during the first period of time represent a light measurement, wherein no emission light is guided through the cavities during a second period of time and the light signals measured during the second period of time represent a dark measurement, wherein one light measurement is carried out in each case and one dark measurement is carried out in each case separately for each detector unit, wherein the dark measurement is subtracted from the light measurement for each detector unit, wherein in particular multiple measurement cycles are run through, wherein at least one light measurement and at least one dark measurement are measured in each measurement cycle, and from each light measurement measured in one measurement cycle a dark measurement measured by the same detector unit in the same measurement cycle is subtracted.

15. The method according to any one of Claims 10 to 14, **characterized in that** emission light is generated with at least two, in particular at least three, in particular at least four different wavelengths by means of one light-emitting diode (21a, 21b, 21c, 21d) of the emission source (20) in each case, wherein the bandwidth of the emission light of each light-emitting diode (21a, 21b, 21c, 21d) is limited by means of one interference filter (22) in each case, wherein in particular a first light-emitting diode (21a) emits emission light with a wavelength of 405 nm, a second light-emitting diode (21b) emits emission light with a wavelength of 450 nm, a third light-emitting diode (21c) emits emission light with a wavelength of 540 nm and a fourth light-emitting diode (21d) emits emission light with a wavelength of 630 nm, wherein in particular the examination of the samples takes place sequentially for each wavelength.

## Revendications

1. Dispositif de transmission (1) destiné à l'analyse d'échantillons dans des cavités (80) d'une plaque de microtitrage (8), comprenant une unité d'éclairage (2) et une unité de détection (4) aptes à être assemblée à l'unité d'éclairage, entre lesquelles, à l'état assemblé du dispositif de transmission (1), est formé un espace intermédiaire (6) agencé de manière à recevoir une plaque de microtitrage (8), l'unité d'éclairage (2) présentant au moins une source d'émission (20) conçue pour diviser la lumière d'émission générée par ladite source d'émission (20) en plusieurs trajets de faisceaux partiels (25) qui, à l'état assemblé du dispositif de transmission, s'étendent à travers l'espace intermédiaire (6), l'unité de détection (4) présentant des unités de détection conçues et agencées de manière à mesurer séparément les signaux lumineux incidents le long des trajets de faisceaux de transmission, l'unité d'éclairage (2) et l'unité de détection (4) étant conçues de telle sorte que, pour assembler le dispositif de transmission (1), l'unité d'éclairage (2) puisse être placée par le haut sur l'unité de détection (4) ou, inversement, que l'unité de détection (4) puisse être placée sur l'unité d'éclairage (2), et le dispositif de transmission (1), à l'état assemblé, se présente sous la forme d'un ensemble de mesure fermé, et une plaque de microtitrage (8) n'est apte à être insérée par le haut que lorsque le dispositif de transmission (1) est dans un état d'ouverture, état dans lequel l'unité d'éclairage (2) et l'unité de détection (4) sont séparées l'une de l'autre, dans un logement (5) ouvert vers le haut et fermé latéralement, situé au-dessous de l'unité d'éclairage (2) et de l'unité de détection (4).

2. Dispositif de transmission (1) selon la revendication 1, **caractérisé en ce que** l'unité d'éclairage (2) et l'unité de détection (4) présentent, au moins par endroits, des formes complémentaires l'une de l'autre, assurant un auto-centrage lors de l'assemblage du dispositif de transmission (1) et/ou **en ce que** l'unité d'éclairage (2) et l'unité de détection (4) présentent des formes complémentaires l'une de l'autre, qui, lorsqu'elles sont superposées ou emboîtées l'une dans l'autre, assurent une fermeture étanche, notamment étanche à la lumière, de l'espace intermédiaire (6) et/ou présentent des moyens pour exclure la lumière ambiante.

3. Dispositif de transmission (1) selon la revendication 1 ou la revendication 2, **caractérisé en ce que** l'unité d'éclairage (2) et l'unité de détection (4) présentent des moyens de connexion électriques, optiques et/ou sans fil adaptés les uns aux autres et/ou complémentaires, lesdits moyens de connexion étant notamment conçus sous la forme d'un ou de plusieurs connecteurs électriques et/ou optiques (44, 45) qui s'emboîtent les uns dans les autres ou s'alignent les uns par rapport aux autres lors de l'assemblage du dispositif de transmission (1).

4. Dispositif de transmission (1) selon l'une des revendications 1 à 3, **caractérisé en ce que** l'unité de détection (4) est conçue pour mesurer simultanément les signaux lumineux pour chaque trajet de faisceau de transmission.

5. Dispositif de transmission (1) selon l'une des revendications 1 à 4, **caractérisé en ce que** l'unité d'éclairage (2) est conçue de manière à diviser la lumière émise par la source d'émission (20) en au moins quatre-vingt-seize trajets de faisceaux partiels (25), quatre-vingt-seize de ces trajets de faisceaux partiels (25) étant prévus sous la forme de faisceaux de transmission, et l'unité de détection (4) comprend quatre-vingt-seize unités de détection.

6. Dispositif de transmission (1) selon l'une des revendications 1 à 5, **caractérisé en ce qu'**au moins l'un des trajets de faisceaux partiels (25) est un trajet de faisceau (30) de référence, qui est conçu de manière à guider la lumière émise vers une unité de détection (32) de référence agencée dans l'unité d'éclairage (2).

7. Dispositif de transmission (1) selon l'une des revendications 1 à 6, **caractérisé en ce que** l'espace intermédiaire (6) a une forme essentiellement complémentaire à celle de la plaque de microtitrage (8) qui est apte à être introduite dans l'espace intermédiaire (6) ou qui se trouve dans celui-ci.

8. Dispositif de transmission (1) selon l'une des revendications 1 à 7, **caractérisé en ce que** l'unité d'éclairage (2) comprend un mélangeur de lumière (24) qui est conçu pour homogénéiser la lumière d'émission générée par la source d'émission (20) et pour la répartir avec une intensité uniforme sur les trajets de faisceaux partiels (25), le mélangeur de lumière (24) présentant notamment une section rectangulaire, les trajets de faisceaux partiels (25) dans l'unité d'éclairage (2) s'étendant notamment chacun dans un guide de lumière (26) dont les faces d'entrée sont regroupées et aboutissent au mélangeur de lumière (24), les guides de lumière (24) dans lesquels s'étendent les trajets de faisceaux de transmission sont conçus de manière à diriger une partie de la lumière émise par le mélangeur de lumière (24) vers une ouverture d'émission (27) respective de l'unité d'éclairage (2), les ouvertures d'émission (27) étant notamment réalisées sous forme d'évidements dans une plaque de support (28), et des lentilles sphériques étant notamment agencées dans les ouvertures d'émission (27).

9. Dispositif de transmission (1) selon la revendication 8, **caractérisé en ce que** la source d'émission (20) comprend au moins deux, en particulier au moins trois, en particulier au moins quatre, diodes électroluminescentes (21a, 21b, 21c, 21d), la lumière émise par les diodes électroluminescentes (21a, 21b, 21c, 21d) est réunie dans le mélangeur de lumière (24), un filtre d'interférence (22) étant agencé entre au moins l'une des diodes électroluminescentes (21a, 21b, 21c, 21d) et le mélangeur de lumière (24), et dans lequel, en particulier, une lentille sphérique (23) est agencée en amont du filtre d'interférence (22), et, en particulier, une autre lentille sphérique est agencée en aval de ce filtre.

10. Procédé d'analyse d'échantillons dans des cavités (80) d'une plaque de microtitrage (8) par transmission, la plaque de microtitrage (8) étant agencée dans un espace intermédiaire (6) entre une unité d'éclairage (2) et une unité de détection (4), la lumière d'émission étant générée pendant une première période de temps dans l'unité d'éclairage (2) au moyen d'une source d'émission (20), la lumière émise étant divisée, au sein de l'unité d'éclairage (2), en plusieurs trajets de faisceaux partiels (25), plusieurs de ces trajets de faisceaux partiels (25) s'étendant, en tant que trajets de faisceaux de transmission, à travers une cavité respective (80) de la plaque de microtitrage (8) vers une unité de détection respective de l'unité de détection (4), et dans lequel, pendant la première période de temps, les signaux lumineux incidents le long des trajets de faisceaux de transmission sont mesurés séparément pour chaque trajet de faisceau de transmission au moyen des unités de détection, l'unité d'éclairage (2) étant séparée de l'unité de détection (4) afin de permettre la mise en place de la plaque de microtitrage (8) dans l'espace intermédiaire (6), la plaque de microtitrage (8) étant insérée par le haut dans un logement (5) ouvert vers le haut et fermé latéralement, situé dans la partie inférieure de l'unité d'éclairage (2) et de l'unité de détection (4), laquelle forme une partie de l'espace intermédiaire (6), et, après l'insertion de la plaque de microtitrage (8), l'unité d'éclairage (2) est assemblée à l'unité de détection (4) pour former un dispositif de transmission (1) fermé, et notamment étanche à la lumière, selon l'une des revendications 1 à 11, en plaçant l'unité d'éclairage (2) par le haut sur l'unité de détection (4) ou, inversement, l'unité de détection (4) sur l'unité d'éclairage (2).

11. Procédé selon la revendication 10, **caractérisé en ce qu'**un trajet de faisceau de transmission s'étend à travers chaque cavité (80) de la plaque de microtitrage (8), les signaux lumineux étant mesurés simultanément pour chaque trajet de faisceau de transmission.

12. Procédé selon la revendication 10 ou la revendication 11, **caractérisé en ce que** la lumière émise par l'unité d'éclairage (2) est divisée en au moins quatre-vingt-seize trajets de faisceaux partiels (25), quatre-vingt-seize de ces trajets de faisceaux partiels (25) étant prévus en tant que trajets de faisceaux de transmission et, pendant la première période de temps, les signaux lumineux incidents le long des trajets de faisceaux de transmission étant mesurés séparément pour chaque trajet de faisceau de transmission au moyen de quatre-vingt-seize unités de détection.

13. Procédé selon l'une des revendications 10 à 12, **caractérisé en ce qu'**un vieillissement de la source d'émission (20) et/ou une variation des longueurs d'onde de l'intensité de la lumière émise par la source d'émission (20) est/sont mesuré(s) au moyen d'une mesure de référence, la lumière émise étant dirigée via un trajet de faisceau (30) de référence vers une unité de détection (32) de référence agencée dans l'unité d'éclairage (2) et qui détecte l'intensité de la lumière émise, l'intensité de la lumière émise étant comparée à des valeurs préalablement mesurées et/ou prédéfinies pour l'intensité de la lumière émise.

14. Procédé selon l'une des revendications 10 à 13, **caractérisé en ce que** les signaux lumineux mesurés pendant la première période de temps constituent une mesure de lumière, aucune lumière d'émission n'étant guidée à travers les cavités pendant une deuxième période, et **en ce que** les signaux lumineux mesurés pendant la deuxième période de temps constituent une mesure d'obscurité, une mesure de lumière et une mesure d'obscurité étant effectuées séparément pour chaque unité de détection, la mesure d'obscurité étant soustraite de la mesure de lumière pour chaque unité de détection, plusieurs cycles de mesure étant notamment effectués, au moins une mesure de lumière et au moins une mesure d'obscurité étant effectuées au cours de chaque cycle de mesure, et une mesure d'obscurité mesurée au cours du même cycle de mesure par la même unité de détection étant soustraite de chaque mesure de lumière mesurée au cours d'un cycle de mesure.

15. Procédé selon l'une des revendications 10 à 14, **caractérisé en ce qu'**une lumière d'émission présentant au moins deux, en particulier au moins trois, en particulier au moins quatre, longueurs d'onde différentes est générée au moyen d'une diode électroluminescente (21a, 21b, 21c, 21d) respective de la source d'émission (20), la largeur de bande de la lumière d'émission de chaque diode électroluminescente (21a, 21b, 21c, 21d) est limitée au moyen d'un filtre d'interférence (22) respectif, une première diode électroluminescente (21a) émettant notamment une lumière d'émission d'une longueur d'onde de 405 nm, une deuxième diode électroluminescente (21b) émettant notamment une lumière d'émission d'une longueur d'onde de 450 nm, une troisième diode électroluminescente (21c) émettant notamment une lumière d'émission d'une longueur d'onde de 540 nm et une quatrième diode électroluminescente (21d) émettant notamment une lumière d'émission d'une longueur d'onde de 630 nm, l'analyse des échantillons s'effectuant notamment de manière séquentielle pour chaque longueur d'onde.
